# EUROPEAN PATENT SPECIFICATION

(11) **EP 4 484 720 B1**
(45) Date of publication and mention of the grant of the patent: **05.11.2025**
(21) Application number: 23181785.9
(22) Date of filing: 27.06.2023
(51) Int. Cl.: F01M 1/10, F16N 39/06, B63H 21/38, B01D 29/11

(54) **OIL FILTRATION AND LUBRICATION SYSTEM FOR SEALING SYSTEM OF AZIMUTH THRUSTER**
ÖLFILTER- UND SCHMIERSYSTEM FÜR DICHTUNGSSYSTEM EINES AZIMUTTRIEBWERKES
SYSTÈME DE FILTRATION ET DE LUBRIFICATION D'HUILE POUR SYSTÈME D'ÉTANCHÉITÉ DE PROPULSEUR AZIMUTAL

(43) Date of publication of application: 01.01.2025
(73) Proprietor: Steerprop Oy, 26101 Rauma (FI)
(72) Inventor: Sirrola, Jarkko, 26200 Rauma (FI)
(74) Representative: Moosedog Oy

(56) References cited:
- EP-A1- 3 279 079
- DE-B4- 102015 204 293
- DE-U1- 202009 009 031
- JP-A- 2003 127 988
- US-A1- 2017 305 521

## Description

### TECHNICAL FIELD

The present disclosure relates to oil filtration and lubrication systems for sealing systems of azimuth thrusters. The present disclosure also relates to systems incorporating such oil filtration and lubrication systems. The present disclosure further relates to methods implementing such oil filtration and lubrication systems.

### BACKGROUND

Azimuth thrusters are widely employed in marine applications to enhance vessel manoeuvrability and operational efficiency. These thrusters consist of a propeller mounted on a rotatable pod, enabling 360-degree directional control. A sealing system, such as an azimuthing seal, is integrated into the thruster to prevent oil leakage and ensure the efficient operation of the propulsion system.

In conventional azimuth thruster, lubrication is achieved by using lubrication oil within the sealing system. However, over time, impurities and contaminants can accumulate in the oil, compromising its lubricating properties and potentially causing damage to the sealing components. Therefore, effective oil filtration and lubrication systems are essential to maintain optimal performance and extend the service life of the sealing system.

However, the existing oil filtration and lubrication systems often face challenges in effectively removing impurities from the oil and ensuring a consistent supply of clean and properly lubricated oil to the sealing system. Moreover, they are expensive to maintain. The filter can become clogged with contaminants and need to be replaced regularly. Inadequate filtration can lead to the deposition of contaminants on sealing surfaces, reducing their effectiveness and increasing the risk of oil leakage. Insufficient lubrication may result in increased friction, wear, and potential damage to the sealing components.

In a German patent document DE102015204293B4 (Christoph Czislinsky; "Oil filter device for an internal combustion engine and internal combustion engine"; assigned to Rolls Royce Solutions GmbH), there is disclosed an oil filter device for an internal combustion engine with a first filter arranged in side-stream to at least one oil centrifuge and adapted for the filtration of particles with a characteristic length of more than microns, and with a second filter arranged downstream of the first filter, seen along a flow direction of the oil, characterized in that the second filter is arranged for filtering particles having a characteristic length of less than 25 µm, and in that the first filter is arranged in sidestream to a third filter.

Further, in a United States patent document US 2017/305521A1 (Lionel Julliand, Loic Vincent; "Propulsion unit for an aquatic vehicle comprising a hydraulic fluid conditioning module and a conditioning control method" assigned to GE Energy Power Conversion Technology Ltd), there is disclosed a propulsion unit for an aquatic vehicle consists of a mobile casing mounted in a pivot connection in relation to a hull element of the aquatic vehicle, a drive shaft of a propeller, said shaft being mounted rotatably within the mobile casing by means of at least one bearing consisting of a closed space adapted to be filled with a hydraulic fluid, an electrical machine being adapted to drive the rotary drive shaft in relation to the mobile casing, where the propulsion unit further consists of a module for conditioning the hydraulic fluid contained in the closed space of the bearing. The propulsion unit also consists of a control device to control the conditioning, the control device consisting of a temperature sensor and capable of activating the conditioning of the hydraulic fluid contained in the closed space according to the temperature measured by the temperature sensor.

Furthermore, in a Japan patent document JP2003127988A (Seiji Yamatake, Itsuki Matsuoka, Masahiro Katsube; "Sealing device for underwater structure"; assigned to Cobelco Marine Engineering Kk) there is disclosed a sealing device for the underwater structure comprises a casing located at the rear end of the underwater structure, an inserted propeller shaft, a lubrication chamber formed with a plurality of seal rings a gravity tank for supplying a lubricating liquid to the lubrication chamber, and air supply means for supplying to the gravity tank a pressurized air changing in linkage with the draft pressure. The air supply means consists of a compressed air source, a detection pipe for blowing the pressurized air from the compressed air source to the outside, and a plurality of air relays for setting the pressurized air from the compressed air source at a preset output pressure using air pressure in the detection pipe as pilot pressure and applying the output pressure to the gravity tank.

EP 3279079 A1 discloses an azimuth thruster sealing system with an oil filtration and lubrication system, according to the preamble of claim 1.

Therefore, in light of the foregoing discussion, there exists a need to overcome the aforementioned drawbacks.

### SUMMARY

The aim of the present disclosure is to provide an oil filtration and lubrication system, a system and a method implementing such an oil filtration and lubrication system to remove impurities from oil, such impurities down to 0.1 micrometre in size. The aim of the present disclosure is achieved by an oil filtration and lubrication system for a sealing system of an azimuth thruster, a system and a method implementing such an oil filtration and lubrication system, as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic view of an oil filtration and lubrication system for a sealing system of an azimuth thruster, in accordance with an embodiment of the present disclosure;
FIG. 2 is a schematic view of an oil filtration and lubrication system integrated into a closed loop system, in accordance with an embodiment of the present disclosure;
FIGs. 3A and 3B are side view and perspective view, respectively, of an oil filter, in accordance with an embodiment of the present disclosure;
FIG. 4 is a cross-sectional view of an azimuth thruster, in accordance with an embodiment of the present disclosure;
FIG. 5 is a sectional view of the azimuthing seal, in accordance with the embodiment of the present disclosure; and
FIG. 6 is a sectional view of the propeller shaft seal, in accordance with the embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides an azimuth thruster sealing system with an oil filtration and lubrication system, the oil filtration and lubrication system comprising:
an oil filter comprising a plurality of layers of a filter material, the plurality of layers being arranged within an oil filtration chamber such that adjacent layers amongst the plurality of layers have a predefined distance therebetween; and
an oil circulation arrangement,
wherein, the oil circulation arrangement enables passage of unfiltered oil between the layers of the oil filter, at a flow rate which is less than a predefined flow rate, the oil filter removes impurities from the unfiltered oil, and the filtered oil is passed from the oil filter to the sealing system of the azimuth thruster, by the oil circulation arrangement, wherein the filtered oil lubricates at least one of: an azimuthing seal, a propeller shaft seal, of the azimuth thruster, and wherein the oil filter is configured to remove impurities from the oil, which impurities have a size of down to 0.1 micrometre. The impurities are (or can be) smaller than the lubrication oil film thickness under the seal,
wherein the predefined flow rate lies in a range of 0.1 litres per minute - 1 litre per minute, and
wherein the predefined distance lies in a range of 10 -50 micrometres.

According to the first aspect of the present disclosure, there is provided the aforementioned system for a sealing system of an azimuth thruster. The oil filtration and lubrication system ensures the removal of impurities and contaminants, including those as small as 0.1 micrometres from the oil. The filter element is positioned within the system to capture impurities before reaching the sealing system, thereby preventing potential damage or leakage. The system forms a closed-loop configuration that is fluidically coupled to the oil tank, oil filter, and sealing system (such as the azimuthing seal and propeller shaft seal). The closed-loop arrangement facilitates controlled oil flow, efficient filtration, and targeted lubrication, resulting in improved sealing system performance. Additionally, the oil circulation arrangement within the system ensures the flow of both unfiltered and filtered oil. The flow rate is controlled based on the rotational speed of the sealing system. A processor, coupled with sensors, monitors the rotational speed and adjusts the flow rate accordingly. This synchronization ensures that the sealing system receives the appropriate amount of clean, filtered oil for effective lubrication and sealing performance.

In a second aspect, the present disclosure provides a system comprising an azimuth thruster and an oil filtration and lubrication system of the first aspect, for the azimuth thruster.

According to the second aspect of the present disclosure, there is provided with the aforementioned system includes the azimuth thruster sealing system with the oil filtration and lubrication system. The oil filtration and lubrication system ensures that clean oil flows into the azimuth thruster that is free from contaminants which minimize the risk of component damage and oil leakage. The arrangement of the azimuth thruster and an oil filtration and lubrication system is configured to provide adequate lubrication and reduce friction, wear, and potential heat build-up. And all of this because the capability to remove the very small particles, down to 0.1 micrometre.

This enhances the performance of the system and also contributes to energy efficiency to extend the life of the azimuth thruster.

In a third aspect, the present disclosure provides a method of operating the azimuth thruster sealing system with the oil filtration and lubrication system comprising:
for removing impurities from unfiltered oil by passing the unfiltered oil through the oil filter, and delivering filtered oil to the azimuth thruster.

According to the third aspect of the present disclosure, there is provided the aforementioned method. The method is configured to remove impurities from the oil, such as dirt, debris, and water. These impurities can cause wear and tear on the azimuth thruster, and can also lead to premature failure. By removing these impurities, the oil filtration and lubrication system can help to improve the reliability of the azimuth thruster. The oil filtration and lubrication system can also help to improve the performance of the azimuth thruster by reducing friction and improving safety by reducing the risk of fire or explosion.

Throughout the present disclosure, the term *"azimuth thruster"* as used herein refers to a type of marine propulsion system that uses a propeller to generate thrust in any direction. The propeller is mounted in a pod that can rotate 360 degrees, allowing the azimuth thruster to be used for both propulsion and steering. Typically, the pod is mounted on a gimbal that allows the thruster to be tilted in any direction. Optionally, the azimuth thruster also includes a control system that can be used to rotate the pod and tilt the gimbal. Herein, the azimuth thruster comprises the oil filtration and the lubrication system for the sealing system.

The term *"sealing system"* refers to a system that provides a barrier to prevent leakage or ingress of fluids, gases, or contaminants within the azimuth thruster. Typically, the sealing element present within the sealing system is configured to prevent the said ingress. The sealing material may include but is not limited to O-rings, gasket, lip seal, mechanical seal, gland packing, and so forth. Notably, the sealing material must possess properties such as flexibility, durability, chemical resistance, and thermal stability to withstand operating conditions. The sealing material is fabricated from rubber, silicone, metal, fibre or composite materials. The sealing element is designed to fit precisely, creating a tight and reliable seal against the passage of fluids or contaminants.

The term *"oil filtration and lubrication system"* refers to a system that removes contaminants from the oil and lubricates the moving parts. The oil filtration and lubrication system helps to keep the oil clean and free of debris. In particular, the oil filtration and lubrication system helps in lubricating the moving parts of the azimuth thruster to prevent wear and tear thereof and thereby extends the life of the azimuth thruster. Moreover, the oil filtration and lubrication system helps to reduce friction between moving parts of the azimuth thruster by applying a layer of lubricant between the parts, which helps to keep them from rubbing directly against each other. The oil filtration system works by circulating the oil through the azimuth thruster.

Typically, the oil forms a thin film between the moving parts, which helps to keep them from rubbing directly against each other. Thus, reducing wear and tear and extending the lifespan of the azimuth thruster. The oil is typically made from a base oil and a variety of additives are added to improve the performance of the oil and provide benefits, such as corrosion protection, wear resistance, and foaming control. In an embodiment, the oil used is a lubricating oil that is utilised in the oil filtration and lubrication system to lubricate the azimuth thruster to reduce friction, heat, and wear between the moving parts.

Moreover, the debris and contaminants from the azimuth thrust are mixed with the oil during the lubrication, therefore the oil filter is used in the oil filtration and lubrication system to filter the debris and contaminants from the oil. The oil filter is a component that is designed to remove impurities and contaminants from the oil before it circulates through the moving parts of the azimuth thruster. The oil filter is arranged to protect the engine by ensuring that clean oil is supplied to lubricate and also cool the moving parts. The oil filter is configured to remove particles such as dirt, metal shavings, and sludge, the oil filter helps to prevent premature wear, reduce friction, and maintain optimal performance.

The oil filter comprises the plurality of layers of the filter material. The plurality of layers of the filter material is stacked on top of each other to form the oil filter. The plurality of layers of the filter material increases the surface area available for capturing and trapping contaminants. Notably, each layer provides a surface for impurities to be captured, allowing for an improved capacity and lifespan of the oil filter before it needs to be replaced or cleaned. Moreover, the plurality of layers enables the filter material to have varying levels of filtration. Optionally, the plurality of layers has different pore sizes or structures, which allows for the removal of impurities of different sizes and types. In this regard, the oil filter includes a plurality of primary layers and a plurality of secondary layers stacked upon the plurality of primary layers. The plurality of primary layers can capture smaller impurities, while the plurality of secondary layers can capture larger impurities.

It will be appreciated that the stacking of the plurality of layers allows the progressive filtration of the oil as it passes through the filter material. The oil filter has the plurality of layers of the filter material arranged adjacent to each other have a predefined distance. The oil filter comprises a central core, which provides stability and support to the adjacently arranged plurality of layers. The central core is surrounded by the plurality of layers. A technical effect of the plurality of layers of the filter material enables the oil to pass through each layer, allowing varying filtration capabilities. The plurality of layers maximizes the surface area available for filtration, providing efficient removal of impurities and ensuring that clean oil is supplied to the oil filtration and lubrication system. Additionally, the plurality of layers helps with the uniform distribution and controlled flow of the oil being filtered. The plurality of layers is designed to promote even distribution of the oil ensuring that the oil passes through each layer before exiting the filter. This promotes more thorough filtration and prevents bypassing of unfiltered oil. Beneficially, the plurality of layers of filter material is typically more effective in filtering contaminants than oil filters with a single layer of filter material. This is because the multiple layers of filter material provide a larger surface area for contaminants to be trapped. In an embodiment, the filter material is arranged in a pleated or folded manner, which increases the surface area available for filtration. The said configuration allows for a larger contact area between the oil and the filter material, enhancing the ability to capture impurities.

The oil filter is configured to remove impurities from the oil, which impurities have a size down to 0.1 micrometre. The oil filter is configured in a way that it effectively captures and retains impurities with a size down to 0.1 micrometre. The impurities, if not removed, can cause abrasive wear, increase friction, clog oil passages, and impair the overall functioning of the azimuth thruster. The oil filter traps and removes impurities of the size limitation of 0.1 micrometre ensuring that even the smallest particles are effectively captured. The filter material is composed of passages or channels that allow oil to flow while trapping impurities. The passages are designed to have dimensions smaller than the targeted impurity size, ensuring that impurities are unable to pass through and are effectively captured.

Optionally, a length of a given layer amongst the plurality of layers of the filter material, along a direction of oil flow through the oil filtration chamber, lies in a range of 10 - 100 cm. Optionally, the length of a given layer amongst the plurality of layers of the filter material lies in the range of 10, 15, 30, 60, or 90 up to 15, 30, 60, 90 or 100. In this regard, the length of the given layer amongst the plurality of layers of the filter material may lie in a range of 10 - 100 cm along the direction of oil flow. Notably, the length of the plurality of layers ensures that the filter material is able to effectively filter the oil. If the length of the filter material is too short, it will not be able to remove all of the impurities from the oil. If the length of the filter material is too long, it will create too much resistance to the flow of oil, which can damage the azimuth thruster. For example, the length of each layer of filter material is in the range of 30 cm. If the length of one of the layers is less than 30 cm, it will not be able to remove all of the impurities from the oil and if the length of one of the layers is greater than 30 cm, it will create too much resistance to the flow of oil. A technical effect of the predetermined length of the given layer amongst the plurality of layers of the filter material is that it helps in ensuring that clean oil is provided to the azimuth thruster to prevent breakdown thereof.

Optionally, the filter material is at least one of: cellulose, fibreglass, paper, textile, a composite fibre or a combination of the aforementioned. In this regard, the filter material is fabricated from a porous material that allows oil to flow through it while trapping impurities. Optionally, the cellulose is utilised as the filter material and has a fibrous structure that provides a large surface area for trapping impurities. The fibreglass is a synthetic material composed of fine glass fibres and has high strength and temperature resistance as compared to the cellulose. Optionally, the paper is utilised to fabricate filter material due to its affordability and availability. In an embodiment, the textile-based filter material is used. The textile can include woven or non-woven fabrics. The textile offers better permeability and may have various pore sizes. More optionally, the composite fibre is used to create a filter material. The composite fibre can be engineered to provide strength, filtration efficiency, and durability. A technical effect of selecting the filter material depending on the capabilities is that it helps in performing the filtration of oil and lubrication of the moving part of the azimuth thruster effectively and also enables capturing the impurities.

The plurality of layers has the predefined distance therebetween. The predefined distance is a distance between the two layers of the filter material arranged adjacent to each other in the oil filter. The predefined distance lies in a range of 10 - 50 micrometers. The predefined distance refers to the distance that has already been set. Optionally, the predefined distance lies in a range of 10, 15, 30, 60, or 45 up to 15, 30, 60, 45 or 50 micrometres. A technical effect of the predefined distance is that it enables the desired outcomes that help in achieving improved performance, efficiency and reliability.

The plurality of layers is arranged within the oil filtration chamber. The term *"oil filtration chamber"* is a compartment or space within the oil filtration and lubrication system that contains the oil filter and allows the oil to flow therethrough for filtration. The filtration chamber is designed to provide a space where the oil comes into contact with the oil filter, allowing the oil filter to capture and remove impurities from the oil. The oil filtration chamber is fabricated from materials such as metals like steel or aluminium, plastics or composite materials. These materials should be resistant to corrosion, heat, and pressure. Optionally, the oil flows into the oil filtration chamber through designated ports or channels. When the oil passes through the oil filter having the plurality of layers of the filter material, it traps and retains impurities and contaminants suspended in the oil. In an embodiment, the oil filtration chamber includes drain plugs or valves that allow for easy disposal of collected impurities during maintenance or oil filter replacement.

The term *"oil circulation arrangement"* is an arrangement that is configured to facilitate the flow of oil throughout the azimuth thruster, for ensuring lubrication and cooling. The oil circulation arrangement is arranged to maintain the optimal performance and longevity of the azimuth thruster. In an embodiment, the oil circulation arrangement includes an oil pump. The oil pump is responsible for drawing oil from a reservoir (such as an oil tank as described below) and pressurizing it to ensure a consistent flow of the oil. The oil forms a thin film between the moving parts, reducing wear and ensuring smooth operation. After lubricating, the oil follows a return back to the oil reservoir allowing for the collection of excess oil and ensuring that the oil circulation remains a continuous cycle. The oil filter is an integral component of the oil circulation arrangement. the oil filter is positioned in line with the oil flow, the oil filter captures contaminants and impurities present in the oil. It prevents these contaminants from circulating within the system, ensuring that only clean oil reaches the sealing system of the azimuth thruster.

The azimuthing seal (also referred to as azimuth thruster seal), is a sealing system used in azimuth thrusters. The azimuthing seal ensures the integrity between the stationary upper body and the rotating lower body of the Azimuth thruster. The azimuthing seal is configured to prevent oil leakage and water ingress into the thruster system and maintains a watertight and oil-tight barrier, protecting the internal components from external elements such as seawater and contaminants. The azimuthing seal is designed to withstand the dynamic forces and extreme operating conditions experienced by the azimuth thruster, including high rotational speeds, variable loads, and hydrostatic pressures.

The azimuthing seal includes stationary housing, a rotating part, sealing elements, and sealing mechanisms. The stationary housing is fixed to the vessel's structure and houses the sealing elements. The rotating hub, attached to the propeller shaft, rotates with the propeller and interfaces with the stationary housing to form a seal. The sealing elements are designed to withstand the forces and movements encountered during operation while maintaining a reliable and effective seal. The sealing mechanisms, such as spring-loaded or hydraulic systems, ensure proper contact and pressure between the sealing elements and the mating surfaces, optimizing the sealing performance.

The propeller shaft seal (also referred to as shaft sealing system) is responsible for sealing the area where the propeller shaft exits the thruster housing, preventing water ingress and ensuring the efficient operation of the propulsion system. The propeller shaft seal is arranged to create a watertight barrier around the propeller shaft to prevent seawater from entering the Azimuth thruster. The propeller shaft shaft seal is also configured to retain the oil within the azimuth thruster.

The propeller shaft seal includes stationary and rotating components. The stationary part is fixed to the azimuth thruster housing and incorporates sealing elements that create a tight seal around the propeller shaft. The rotating component is attached to the propeller shaft and rotates therewith, allowing smooth and unrestricted shaft rotation while maintaining integrity. In particular, the oil is supplied to the seal through the oil filtration and lubrication system, ensuring that the seal surfaces of the propeller shaft seal remain well-lubricated and protected. Beneficially, the lubrication of the propeller shaft seal helps to minimize wear, heat generation, and potential damage to the sealing elements, ensuring the longevity and reliability of the propeller shaft seal.

The lubrication system is configured to flow both unfiltered oil and filtered oil. Typically, the different pathways are arranged for both unfiltered oil and filtered oil. The unfiltered oil is drawn from the reservoir and directed through a passage that bypasses the filtration mechanism. This allows the unfiltered oil to flow directly to the components of the azimuth thruster.

The flow rate of the unfiltered oil is less than a predefined flow rate. The rate at which the unfiltered oil is flowing is slower than a specific flow rate that has been predetermined. The predefined flow rate provides a reference for the desired flow rate of the unfiltered oil. The term *"flow rate"* refers to the speed of the unfiltered oil, that is flowing through a pathway in the oil filtration and lubrication system. The predefined flow rate lies in a range of 0.1 litres per minute - 1 litre per minute. Optionally, the predefined flow rate lies in a range of 0.1, 0.3, 0.4, 0.5, 0.6, 0.7, 0.8 or 0.9 up to 0.3, 0.4, 0.5, 0.6, 0.7, 0.8, 0.9, 1 litre per minute. The unfiltered oil flows at a flow rate between 0.1 - 1 litre per minute.

Optionally, the oil filtration and lubrication system further comprises:
at least one first sensor for detecting presence of at least one of: the impurities, water, in at least one of: the unfiltered oil, the filtered oil;
at least one indicator; and
at least one first processor communicably coupled to the at least one first sensor and the at least one indicator, wherein the at least one first processor is configured to:
   - receive first sensor data from the at least one first sensor;
   - determine whether the first sensor data is indicative of the presence of at least one of: the impurities, the water; and
   - control the at least one indicator to provide a first indication, when it is determined that the first sensor data is indicative of the presence of at least one of: the impurities, the water.

In this regard, the at least one first sensor is arranged for detecting the filtered oil and the unfiltered oil. The sensor is a device, module, machine, or subsystem that detects the presence of impurities or water in the oil (such as filtered and unfiltered oil). The at least one first sensor is designed to assess the quality of the oil by detecting impurities and water that may affect its performance or cause potential damage to the system. Optionally, the at least one first sensor may be an optical sensor, where the said sensor uses light or laser beams to analyse the oil and identify the presence of impurities. By measuring the light transmission or reflection, the sensor can determine the concentration or size of the impurities present. In another embodiment the at least one first sensor may be an electrical sensor, based on electrical conductivity or resistance the sensor can assess the electrical properties of the oil to detect the presence of conductive or non-conductive particles. The electrical sensor enables the identification of metallic contaminants or conductive debris. In yet another embodiment, the at least one first sensor may be the ultrasonic sensor. The said sensor utilises ultrasonic waves to detect impurities and analyse the change in frequency to identify the presence of impurities in the oil.

When impurities are detected, the oil filtration and lubrication system include the at least one indicator. The at least one indicator is operatively coupled to sensors that measure parameters such as oil pressure, flow rate, temperature, or the presence of impurities. Based on the readings from the at least one first sensor. Beneficially, the at least one indicator provides a signal when the oil filter is becoming clogged or is saturated with impurities. For example, the at least one indicator indicates a drop in oil pressure, a blockage in the filter, or a malfunctioning of the at least one first sensor. This serves as a prompt for maintenance or replacement, ensuring that the oil filter is functioning optimally and continuing to remove contaminants effectively. The at least one indicator may display a visual warning, such as a coloured light or a symbol, or it may emit an audible alarm to alert. The at least one first sensor and the at least one indicator are communicably coupled to the at least one first processor.

The term *"processor"* refers to a computational element that is operable to respond to and processes instructions that is received from the at least one first sensor. The processor includes but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the least one processor may refer to one or more individual processors, processing devices and various elements associated with a processing device that may be shared by other processing devices.

The at least one first processor receives the first sensor data from the at least one first sensor. The first sensor data is the representation of the presence of the one of: the impurities, the water sensed by the at least one first sensor in the filtered oil or the unfiltered oil. Moreover, the at least one first processor is configured to determine whether the first sensor data is indicative of the presence of the impurities or the water or both. Furthermore, the at least one first processor control the at least one indicator to provide the first indication. The first indication is may be a visual warning, such as a light or a symbol, or it may emit an audible alarm when it is determined that the first sensor data is indicative of the presence of at least one of: the impurities, the water.

Optionally, the at least one first processor is further configured to control the at least one indicator to provide a second indication when the first sensor data is also indicative of at least one of: an amount of the impurities, the size of the impurities, an amount of the water, being above its corresponding predefined threshold. In this regard, the at least one first processor is programmed to regulate the at least one indicator to provide the second indication. The second indication is triggered when the first sensor data suggests that the level or quantity of impurities, the size of the impurities, or the amount of water present in the oil has surpassed their predetermined thresholds.

The second indication may be a visual alert, such as a warning light or symbol, or an audible signal, such as an alarm or beep. Similarly, if the first sensor data indicates that the size of the impurities present in the system exceeds the predefined threshold, the at least one first processor triggers the at least one indicator to provide the second indication. Furthermore, when the first sensor data reveals that the amount of water in the oil exceeds its predefined threshold, the at least processor instructs the at least one indicator to provide the second indication. A technical effect of the second indication is that it provides an indication when the impurity level, impurity size, or water content exceeds their corresponding predefined thresholds to enable proactive response to critical conditions, allowing for timely maintenance and mitigation measures to be undertaken. For example, if the predefined threshold of relative humidity of oil is less than equal to 50%, however if the relative humidity of oil reaches 80% then the at least one indicator to provide the second indication.

Optionally, the oil filtration and lubrication system is integrated into a closed loop system in which the oil circulation arrangement fluidically couples an oil tank, the oil filter, and the at least one of: azimuthing seal, the propeller shaft seal, with each other. In this regard, the oil circulation arrangement fluidically coupled to the oil tank, oil filter, and the at least one of: azimuthing seal, the propeller shaft seal, with each other forming the closed loop. In this case, the oil circulation arrangement receives the unfiltered oil from the oil tank, passes the filtered oil from the oil filter to the at least one of: the steering tube seal, the propeller shaft seal, and directs contaminated oil including impurities from the at least one of: the steering tube seal, the propeller shaft seal, into the oil tank, wherein such contaminated oil serves as the unfiltered oil for a next cycle of oil filtration. In particular, the oil tank is responsible for storing an adequate supply of oil required for lubrication and filtration within the system. It serves as the reservoir from which the oil is drawn and circulated throughout the system to provide lubrication and cooling to the relevant components. The oil filter is responsible for removing impurities and contaminants from the oil. It is designed to trap particles and debris, ensuring that the oil remains clean and free. The filtered oil is then directed to the desired areas where lubrication is required.

The oil circulation arrangement facilitates the flow of oil between the oil tank, oil filter, azimuthing seal or propeller shaft seal. The oil circulation arrangement ensures that the oil is efficiently transported from the oil tank to the oil filter for purification and then distributed to the azimuthing seal and the propeller shaft seal. The azimuthing seal and the propeller shaft seal are positioned to prevent oil from escaping or entering unwanted areas, ensuring the integrity of the system and minimizing the risk of external contamination or lubricant loss. The oil filtration and lubrication system are integrated into a closed-loop arrangement with a fluidic coupling that operates in a continuous and controlled manner. The oil is circulated, filtered, and directed to the components, while the seals ensure effective containment and prevent any unintended oil leakage. A technical effect of the closed-loop system is that it ensures a consistent supply of clean and filtered oil, promoting efficient lubrication, cooling, and overall performance of the azimuth thruster.

Optionally, the oil circulation arrangement comprises:
a first piping system for fluidically coupling an oil tank with the azimuthing seal, via the oil filter; and
a second piping system for fluidically coupling the oil tank with the propeller shaft seal, via the oil filter.

In this regard, the term *"first piping and second piping"* refers to a network of pipes, fittings, valves, and other components that are interconnected to facilitate the transport of oil from one location to another. The first piping system and the second system are designed to ensure the controlled and efficient flow of oil within the oil circulation arrangement.

The first piping system in the oil filtration and lubrication system is responsible for fluidically connecting the oil tank to the azimuthing seal, through the oil filter. The piping system serves as the conduit through which the oil flows, ensuring a seamless transfer of the oil therebetween. The first piping system directs the oil towards the oil filter. The oil filter removes impurities and contaminants from the oil, ensuring that only clean and filtered oil reaches the azimuthing seal. Once the oil reaches the oil filter through the first piping system, it undergoes the filtration process, where impurities and contaminants are removed. The oil filter traps particles and debris having a size of down to 0.1 micrometre. The azimuthing seal provides a secure barrier and prevents oil leakage, ensuring the oil is contained within the system.

The second piping system in the oil filtration and lubrication system fluidically connects the oil tank with the propeller shaft seal through the oil filter. The second piping system ensures the smooth and controlled flow of oil therebetween, enabling efficient lubrication and sealing of the propeller shaft. The first piping system directs the oil towards the oil filter. The oil filter removes impurities and contaminants from the oil, ensuring clean and filtered oil reaches the propeller shaft seal. The oil reaches the oil filter through the second piping system, it undergoes the filtration process. The oil filter captures particles, debris, and contaminants having a size down to 0.1 micrometre and allows clean oil to pass through and ensures that the oil reaches the propeller shaft seal free from contaminants that could impair the functionality or cause damage.

After passing through the oil filter, the filtered oil is then directed to the propeller shaft seal. The propeller shaft is configured to prevent oil leakage and maintains a secure seal around the propeller shaft. The second piping system ensures that the filtered oil reaches the propeller shaft seal, providing the necessary lubrication and sealing properties. By incorporating the second piping system in the oil filtration and lubrication system, a seamless flow of oil is established from the oil tank to the propeller shaft seal, with the oil filter acting as an intermediate step. A technical effect of the first piping system and the second piping system in the oil filtration and lubrication system is that it enables the seamless transfer of oil from the oil tank to the azimuthing seal and the propeller shaft seal, respectively, via the oil filter and ensures that the oil is properly filtered to remove impurities, promoting efficient lubrication and protecting the azimuthing seal and the propeller shaft seal from potential damage or contamination.

Optionally, the oil circulation arrangement further comprises at least one first valve arranged in the first piping system and at least one second valve arranged in the second piping system, and wherein the oil filtration and lubrication system further comprises:
at least one second sensor that monitors an operational status of at least one of: the azimuthing seal, the propeller shaft seal, of the azimuth thruster; and
at least one second processor communicably coupled to the at least one second sensor, wherein the at least one first processor is configured to:
   receive second sensor data from the at least one second sensor;
   determine whether the at least one of: the azimuthing seal, the propeller shaft seal, is in operation, based on the second sensor data;
   control at least one of: the at least one first valve, the at least one second valve, for enabling oil flow within the at least one of: the first piping system, the second piping system, when it is determined that the at least one of: the azimuthing seal, the propeller shaft seal, is in operation, respectively.

In this regard, the term *"first valve and second valve"* refers to a device that is configured to control and regulate the flow of oil within the piping system. The at least one first valve and second valve are designed to start, stop, or adjust the flow of the oil by opening or closing the passage of the first piping system and the second piping system. Optionally, the valves may be selected but not limited to gate valves, ball valves, globe valves, butterfly valves, check valves, and control valves. The oil filtration and lubrication system include the at least one second sensor that monitors operational status and monitors the working of the least one of: the azimuthing seal, the propeller shaft seal of the azimuth thruster. Moreover, the at least one second sensor is similar to the at least one first sensor. However, the at least one second sensor is arranged in the close vicinity of the azimuthing seal and propeller shaft seal for monitoring the operation of the azimuthing seal, the propeller shaft seal of the azimuth thruster.

Moreover, the oil filtration and lubrication system also include the at least one second processor. The at least one second process is similar to that of the at least one first process. However, the at least one second processor is configured to receive second sensor data from the at least one second sensor. The second sensor data is the information associated with the operation of the steering sealing system and/or the propeller. The at least one second processor is further configured to control the at least one first valve, the at least one second valve, for enabling oil flow within the at least one of: the first piping system, the second piping system, when it is determined that the at least one of: the azimuthing seal, the propeller shaft seal, is in operation, respectively.

Optionally, the at least one second sensor also determines a rotational speed of the at least one of: the azimuthing seal, the propeller shaft seal, in operation, and wherein the at least one first processor is further configured to control the at least one of: the at least one first valve, the at least one second valve, respectively, for enabling the oil flow at a flow rate corresponding to the rotational speed. In this regard, the at least one second sensor measures the rotational speed of the azimuthing seal and/or the propeller when in operation. The at least one first processor is configured to control the at least one first valve and the at least one second valve to enable the flow of oil at a rate that corresponds to the rotational speed thereof.

Moreover, the at least one second sensor is also configured for determining the rotational speed of the azimuthing seal and/or the propeller shaft seal when in operation. This at least one second sensor provides data corresponding to the speed of rotation. The at least one second processor is arranged to control the operation of the at least one first valve and the at least one second valve to regulate the flow of oil. The at least one second processor is configured to adjust and control the at least one first valve and the at least one second valve accordingly based on the rotational speed obtained from the at least one second sensor.

Optionally, by synchronizing the rotational speed with the oil flow rate, the at least one first processor ensures that the lubricating oil is supplied to the components at a rate that matches the operation of the azimuthing seal and the propeller shaft seal. The at least one first valve and the at least one second valve work in tandem to enable the desired oil flow rate. They may open or close to modulate the oil flow, allowing for a sufficient amount of oil to reach based on the rotational speed. The said dynamic adjustment ensures that the lubrication system operates optimally, promoting efficient lubrication, cooling, and protection against wear and tear.

The at least one second sensor senses the rotational speed, and at least one first processor controls the at least one first and second valve, establishing a feedback loop within the system. The at least one second sensor continuously provides real-time data on the rotational speed, and the at least one first processor interprets this information to adjust the valve positions and oil flow rate accordingly. A technical effect of controlling the at least one first valve and the at least one second valve is that it allows for adjustment of the oil flow rate based on the rotational speed that helps in optimising lubrication and cooling, thus promoting efficient operation.

The present disclosure also relates to the system as described above. Various embodiments and variants disclosed above, with respect to the aforementioned oil filtration and lubrication system, apply mutatis mutandis to the system.

Optionally, the oil filtration and lubrication system is formed inside the azimuth thruster. In this regard, the oil filtration and lubrication system are integrated and incorporated within the azimuth thruster. By forming the oil filtration and lubrication system inside the azimuth thruster allows a compact and streamlined design, reducing the overall footprint and complexity of the system. The integration eliminates the need for external piping, connections, and additional equipment, simplifying installation and reducing potential points of failure or leakage.

Moreover, forming the oil filtration and lubrication system inside the azimuth thruster promotes efficient oil flow and distribution, ensuring effective filtration, lubrication, and cooling of the components. Also, it provides better protection and containment of the oil. Furthermore, forming the oil filtration and lubrication system inside the azimuth thruster facilitates better monitoring and maintenance and it becomes more accessible for inspection, servicing, and replacement of components. A technical effect of forming the oil filtration and lubrication system inside the azimuth thruster is that it provides a compact design, optimized oil flow, enhanced protection, and improved maintenance capabilities.

The present disclosure also relates to the method as described above. Various embodiments and variants disclosed above, with respect to the aforementioned oil filtration and lubrication system and the aforementioned system, apply mutatis mutandis to the method.

### DETAILED DESCRIPTION OF THE DRAWINGS

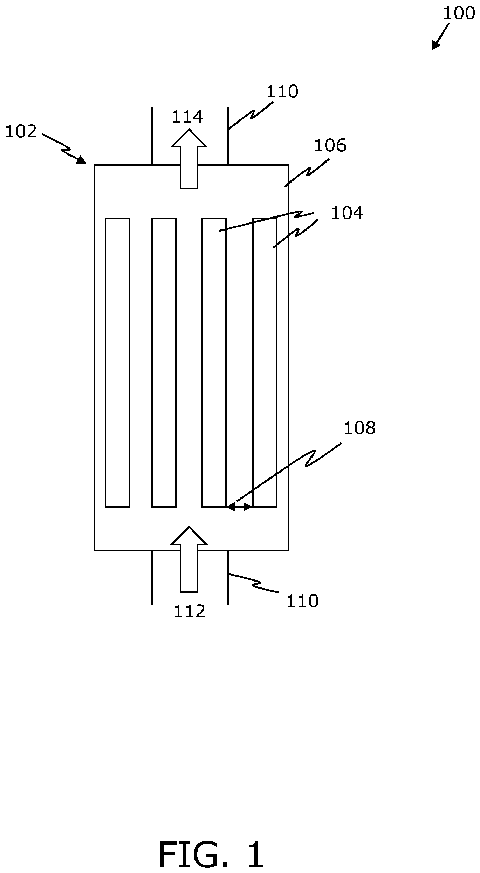

Referring to FIG. 1, illustrated is a schematic view of an oil filtration and lubrication system **100** for a sealing system of an azimuth thruster, in accordance with an embodiment of the present disclosure. As shown, the oil filtration and lubrication system **100** comprises an oil filter **102** comprising a plurality of layers **104** of a filter material. The plurality of layers being arranged within an oil filtration chamber **106** such that adjacent layers amongst the plurality of layers have a predefined distance **108** therebetween. The oil filtration and lubrication system **100** includes an oil circulation arrangement **110.**

Moreover, when the oil filtration and lubrication system **100** is in use, the oil circulation arrangement **110** enables passage of unfiltered oil **112** between the layers of the oil filter **102,** at a flow rate which is less than a predefined flow rate, the oil filter **102** removes impurities from the unfiltered oil **112,** and then filtered oil **114** is passed from the oil filter **102** to the sealing system of the azimuth thruster, by the oil circulation arrangement **110.** Moreover, the filtered oil **114** lubricates at least one of: an azimuthing seal **116,** a propeller shaft seal **118,** of the azimuth thruster. Furthermore, the oil filter **102** is configured to remove impurities from the oil, which impurities have a size of equal or smaller than 0.1 micrometre.

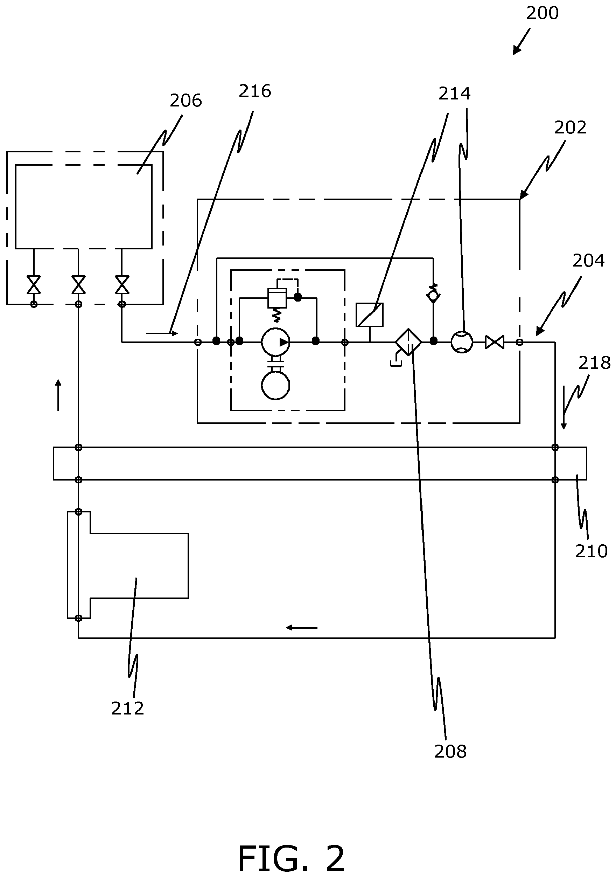

Referring to FIG. 2, illustrated is a schematic view of an oil filtration and lubrication system **200** integrated into a closed loop system **202,** in accordance with an embodiment of the present disclosure. The oil circulation arrangement **204** fluidically couples an oil tank **206,** an oil filter **208,** and the at least one of: the azimuthing seal **210,** the propeller shaft seal **212,** with each other. Moreover, optionally, the oil circulation arrangement **204** comprises a first piping system for fluidically coupling an oil tank **206** with the azimuthing seal **210,** via the oil filter 208 and a second piping system for fluidically coupling the oil tank 206 with the propeller shaft seal **212,** via the oil filter **208.**

The oil filtration and lubrication system **200** includes at least one first sensor **214** for detecting presence of at least one of: the impurities, water, in at least one of: an unfiltered oil **216,** a filtered oil **218,** at least one indicator and at least one processor communicably coupled to the at least one first sensor **214** and the at least one indicator. The at least one processor is configured to receive first sensor data from the at least one sensor **214,** determine whether the first sensor data is indicative of the presence of at least one of: the impurities, the water and control the at least one indicator to provide a first indication, when it is determined that the first sensor data is indicative of the presence of at least one of: the impurities, the water. The oil circulation arrangement **204** further comprises at least one first valve (not shown) arranged in the first piping system and at least one second valve (not shown) arranged in the second piping system.

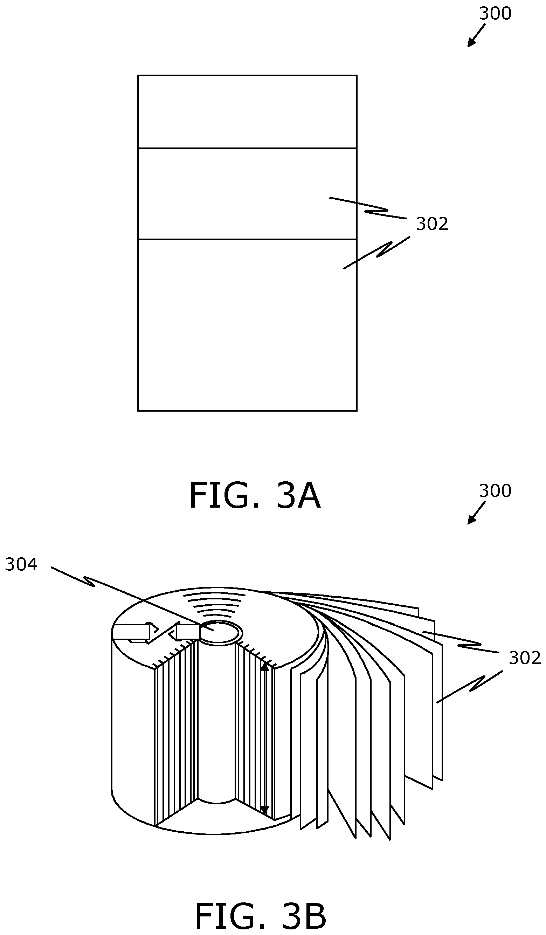

Referring to FIGs. 3A and 3B are side view and perspective view, respectively, of an oil filter **300,** in accordance with an embodiment of the present disclosure. The oil filter **300** comprises the plurality of layers **302** of the filter material. As shown in FIG. 3A, the plurality of layers of the filter material is stacked on top of each other to form the oil filter **300.** increases the surface area available for capturing and trapping contaminants. Notably, each layer provides a surface for impurities to be captured, allowing for an improved capacity. As shown in FIG. 3B, the oil filter **300** has the plurality of layers **302** of the filter material arranged adjacent to each other have a predefined distance. The oil filter comprises a central core **304,** which provides stability and support to the adjacently.

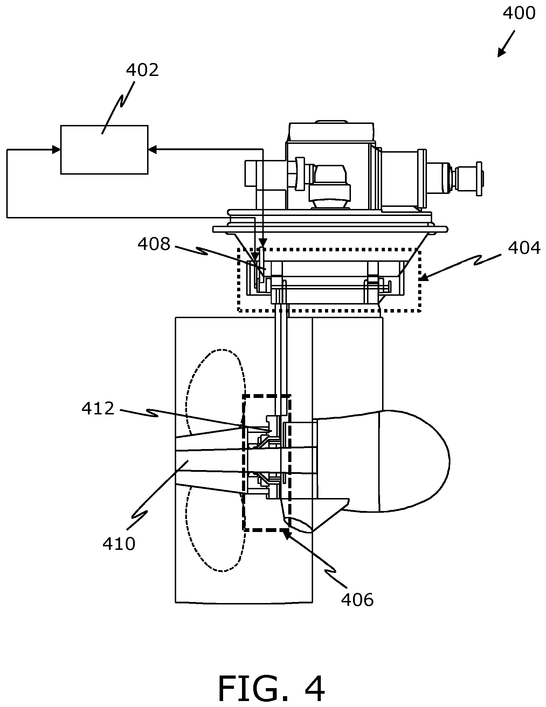

Referring to FIG. 4, illustrated is a cross-sectional view of an azimuth thruster **400,** in accordance with an embodiment of the present disclosure. As shown, an oil tank **402** fluidically couples with the azimuthing seal **404** (depicted as dotted line) and the propeller shaft seal **406** (depicted as dashed line). The azimuthing seal **404** ensures a watertight and secure seal, preventing water ingress and maintaining the integrity of the azimuth thruster **400.** The is arranged at the interface between the rotating components of an azimuth thruster **400** and the stationary components. The azimuth seal **404** is positioned within an azimuthing seal housing **408** that surrounds the rotating parts of the azimuth thruster **400.** The azimuthing seal housing **408** is securely mounted to the stationary components, ensuring proper alignment and positioning of the sealing elements.

The propeller shaft seal **406** is arranged around the propeller shaft **410** of the azimuth thruster **400.** The propeller shaft seal **406** is positioned within a propeller shaft seal housing **412** that surrounds the propeller shaft **410.** The propeller shaft seal housing **412** is mounted on the hull of the azimuth thruster **400** and is located at the point where the propeller shaft exits the hull into the water. The propeller shaft seal **406** is designed to create a watertight barrier between the propeller shaft **410** and the surrounding water, preventing water from entering the azimuth thruster **400.**

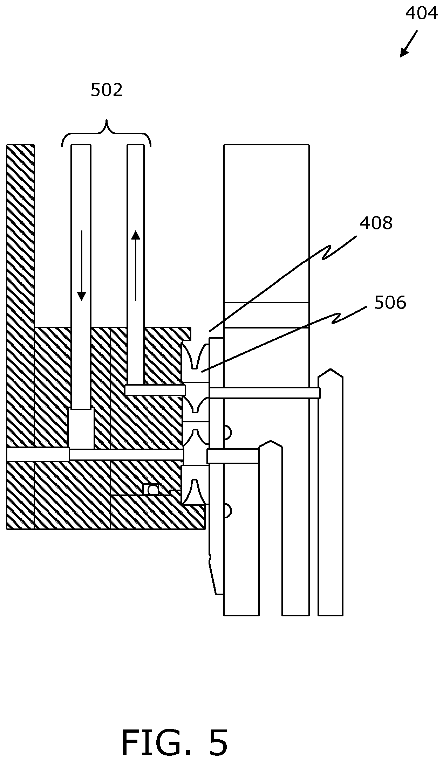

Referring to FIG. 5, illustrated is a sectional view of the azimuthing seal **404,** in accordance with the embodiment of the present disclosure. As shown, the azimuth thruster includes a first piping system **502** for fluidically coupling an oil tank with the azimuthing seal **404** via the oil filter. The azimuthing seal **404** includes the azimuthing seal housing **408** surrounding the sealing element **506.** The sealing element **506** provides a secure enclosure and ensures the proper alignment and positioning. The azimuthing seal housing **408** helps to contain any potential leaks and maintain the integrity of the azimuthing seal **404** under various operating conditions.

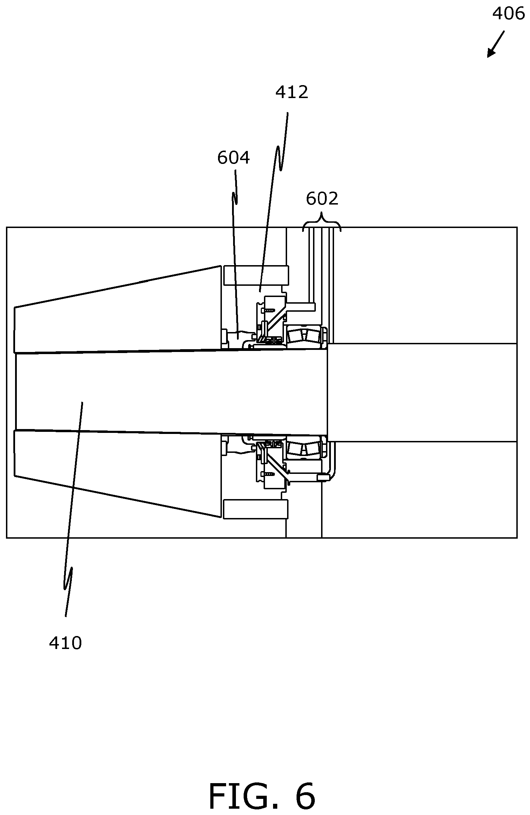

Referring to FIG. 6, illustrated is a sectional view of the propeller shaft seal **406,** in accordance with the embodiment of the present disclosure. As shown, the azimuth thruster includes a second piping system **602** for fluidically coupling the oil tank with the propeller shaft seal **406,** via the oil filter. The propeller shaft seal **406** includes a propeller shaft seal housing **412** configured to provide a protective enclosure around the propeller shaft **410.** Moreover, the propeller shaft seal **406** includes a sealing element **604** fabricated from rubber or synthetic compounds, for creating a tight seal around the propeller shaft **410.** As the propeller shaft **410** rotates, the sealing elements **604** in the propeller shaft seal housing **412** form seal around the propeller shaft **410.**

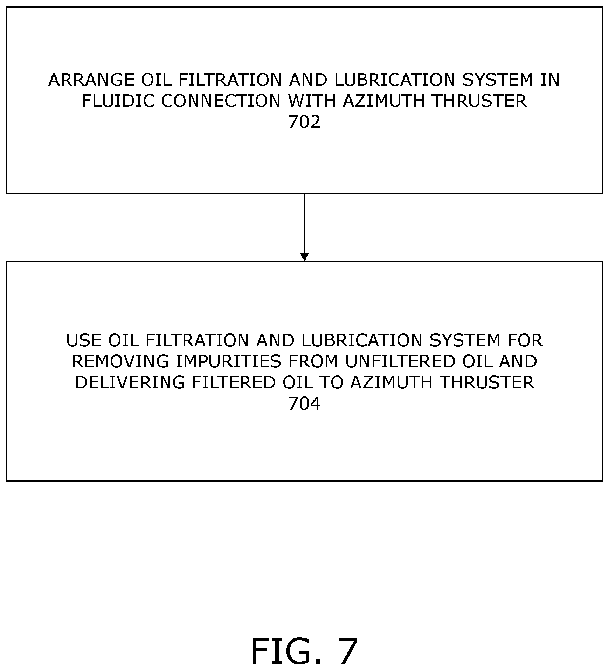

Referring to FIG. 7, there is shown a flowchart of a method illustrating steps for implementing such oil filtration and lubrication system, in accordance with an embodiment of the present disclosure. At step, **702** an oil filtration and lubrication system is arranged in fluidic connection with an azimuth thruster. At step, **704** the oil filtration and lubrication system is used for removing impurities from unfiltered oil, and delivering filtered oil to the azimuth thruster.as operational mode for an electric drive is selected.

The steps **702** and **704** are only illustrative and other alternatives can also be provided where one or more steps are added, one or more steps are removed, or one or more steps are provided in a different sequence without departing from the scope of the claims herein.

## Claims

1. An azimuth thruster sealing system with an oil filtration and lubrication system (100, 200), the oil filtration and lubrication system comprising:
an oil filter (102, 208, 300) comprising a plurality of layers (104, 304) of a filter material, the plurality of layers being arranged within an oil filtration chamber (106) such that adjacent layers amongst the plurality of layers have a predefined distance (108) therebetween; and
an oil circulation arrangement (110, 204),
wherein the oil circulation arrangement enables passage of unfiltered oil (112, 216) between the layers of the oil filter, at a flow rate which is less than a predefined flow rate, the oil filter removes impurities from the unfiltered oil, and the filtered oil (114, 218) is passed from the oil filter to the sealing system of the azimuth thruster, by the oil circulation arrangement,
**characterized in that**
the filtered oil lubricates at least one of: an azimuthing seal (116, 210, 404), a propeller shaft seal (118, 212, 406), of the azimuth thruster, and wherein the oil filter is configured to remove impurities from the oil, which impurities have a size down to 0.1 micrometre,
wherein the predefined flow rate lies in a range of 0.1 litres per minute-1 litre per minute, and
wherein the predefined distance lies in a range of 10 -50 micrometres.

2. The azimuth thruster sealing system with the oil filtration and lubrication system (100, 200) according to any of the preceding claims, wherein a length of a given layer amongst the plurality of layers (104, 304) of the filter material, along a direction of oil flow through the oil filtration chamber (106), lies in a range of 10 -100 cm.

3. The azimuth thruster sealing system with the oil filtration and lubrication system (100, 200) according to any of the preceding claims, wherein the filter material is at least one of: cellulose, fibreglass, paper, textile, a composite fibre, or a combination of the aforementioned.

4. The azimuth thruster sealing system with the oil filtration and lubrication system (100, 200) according to any of the preceding claims, further comprising:
at least one first sensor (120) for detecting presence of at least one of:
the impurities, water, in at least one of: the unfiltered oil, the filtered oil;
at least one indicator; and
at least one first processor communicably coupled to the at least one first sensor and the at least one indicator, wherein the at least one first processor is configured to:
- receive first sensor data from the at least one first sensor;
- determine whether the first sensor data is indicative of the presence of at least one of: the impurities, the water; and
- control the at least one indicator to provide a first indication, when it is determined that the first sensor data is indicative of the presence of at least one of: the impurities, the water.

5. The azimuth thruster sealing system with the oil filtration and lubrication system (100, 200) according to claim 4, wherein the at least one first processor is further configured to control the at least one indicator to provide a second indication when the first sensor data is also indicative of at least one of: an amount of the impurities, a size of the impurities, an amount of the water, being above its corresponding predefined threshold.

6. The azimuth thruster sealing system with the oil filtration and lubrication system (100, 200) according to any of claims 1-5, wherein the oil filtration and lubrication system is integrated into a closed loop system (202) in which the oil circulation arrangement fluidically couples an oil tank (206, 402), the oil filter (102, 208, 300), and the at least one of: the azimuthing seal (116, 210, 404), the propeller shaft seal (118, 212, 406), with each other.

7. The azimuth thruster sealing system with the oil filtration and lubrication system (100, 200) according to claim 6, wherein the oil circulation arrangement (110, 204) comprises:
a first piping system (502) for fluidically coupling an oil tank (206, 402) with the azimuthing seal (116, 210, 404), via the oil filter (102, 208, 300); and
a second piping system (602) for fluidically coupling the oil tank with the propeller shaft seal (118, 212, 406), via the oil filter.

8. The azimuth thruster sealing system with the oil filtration and lubrication system (100, 200) according to claim 7, wherein the oil circulation arrangement (110, 204) further comprises at least one first valve arranged in the first piping system (502) and at least one second valve arranged in the second piping system (602), and wherein the oil filtration and lubrication system (100, 200) further comprises:
at least one second sensor that monitors an operational status of at least one of: the azimuthing seal (116, 210, 404), the propeller shaft seal (118, 212, 406), of the azimuth thruster (400); and
at least one second processor communicably coupled to the at least one second sensor, wherein the at least one first processor is configured to:
receive second sensor data from the at least one second sensor;
determine whether the at least one of: the azimuthing seal, the propeller shaft seal, is in operation, based on the second sensor data;
control at least one of: the at least one first valve, the at least one second valve, for enabling oil flow within the at least one of: the first piping system, the second piping system, when it is determined that the at least one of: the azimuthing seal, the propeller shaft seal, is in operation, respectively.

9. The azimuth thruster sealing system with the oil filtration and lubrication system (100, 200) according to claim 10, wherein the at least one second sensor also determines a rotational speed of the at least one of: the azimuthing seal (116, 210, 404), the propeller shaft seal (118, 212, 406), in operation, and wherein the at least one first processor is further configured to control the at least one of: the at least one first valve, the at least one second valve, respectively, for enabling the oil flow at a flow rate corresponding to the rotational speed.

10. The azimuth thruster sealing system with the oil filtration and lubrication(100, 200) system according to claim 1, wherein the oil filtration and lubrication system (100, 200) is formed inside the azimuth thruster.

11. A method of operating the azimuth thruster sealing system with the oil filtration and lubrication system (100,200) according to any of the claims 1-10, comprising:
removing impurities from unfiltered oil (112, 216) by passing the unfiltered oil through the oil filter (102, 208, 300), and
delivering filtered oil (114, 218) to the azimuth thruster.

## Patentansprüche

1. Dichtungssystem für ein Azimutstrahlruder mit einem Ölfilter- und Schmiersystem (100, 200), das Ölfilter- und Schmiersystem umfassend:
einen Ölfilter (102, 208, 300), umfassend eine Vielzahl von Schichten (104, 304) aus einem Filtermaterial, wobei die Vielzahl von Schichten derart innerhalb einer Ölfiltrationskammer (106) angeordnet sind, dass angrenzende Schichten unter der Vielzahl von Schichten einen vordefinierten Abstand (108) zueinander aufweisen; und eine Ölzirkulationsanordnung (110, 204),
wobei die Ölzirkulationsanordnung einen Durchgang von ungefiltertem Öl (112, 216) zwischen den Schichten des Ölfilters mit einer Strömungsrate ermöglicht, die geringer ist als eine vordefinierte Strömungsrate, der Ölfilter Verunreinigungen aus dem ungefilterten Öl entfernt und das gefilterte Öl (114, 218) durch die Ölzirkulationsanordnung von dem Ölfilter zu dem Dichtungssystem des Azimutstrahlruders geleitet wird,
**dadurch gekennzeichnet, dass** das gefilterte Öl mindestens eines schmiert von: einer Azimutdichtung (116, 210, 404) und/oder eine Propellerwellendichtung (118, 212, 406) des Azimutstrahlruders, und wobei der Ölfilter konfiguriert ist, um Verunreinigungen aus dem Öl zu entfernen, wobei die Verunreinigungen eine Größe von bis zu 0,1 Mikrometer aufweisen,
wobei die vordefinierte Strömungsrate in einem Bereich von 0,1 Liter pro Minute bis 1 Liter pro Minute liegt, und
wobei der vordefinierte Abstand in einem Bereich von 10-50 Mikrometern liegt.

2. Dichtungssystem für das Azimutstrahlruder mit dem Ölfilter- und Schmiersystem (100, 200) nach einem der vorstehenden Ansprüche, wobei eine Länge einer bestimmten Schicht unter der Vielzahl von Schichten (104, 304) des Filtermaterials entlang einer Ölströmungsrichtung durch die Ölfiltrationskammer (106) in einem Bereich von 10-100 cm liegt.

3. Dichtungssystem für das Azimutstrahlruder mit dem Ölfilter- und Schmiersystem (100, 200) nach einem der vorstehenden Ansprüche, wobei das Filtermaterial mindestens eines ist von: Zellulose, Glasfaser, Papier, Textil, eine Verbundfaser oder eine Kombination der zuvor genannten.

4. Dichtungssystem für das Azimutstrahlruder mit dem Ölfilter- und Schmiersystem (100, 200) nach einem der vorstehenden Ansprüche, ferner umfassend:
mindestens einen ersten Sensor (120) zum Erkennen eines Vorhandenseins von mindestens eines von: Verunreinigungen, Wasser, in mindestens einem von: dem ungefilterten Öl, dem gefilterten Öl; mindestens einen Indikator; und
mindestens einen ersten Prozessor, der mit dem mindestens einen ersten Sensor und dem mindestens einen Indikator kommunikationsmäßig gekoppelt ist, wobei der mindestens eine erste Prozessor konfiguriert ist zum:
- Empfangen von ersten Sensordaten von dem mindestens einen ersten Sensor;
- Bestimmen, ob die ersten Sensordaten das Vorhandensein von mindestens eines angeben von: den Verunreinigungen, dem Wasser; und
- Steuern des mindestens einen Indikators, um eine erste Angabe bereitzustellen, wenn bestimmt wird, dass die ersten Sensordaten das Vorhandensein von mindestens eines angeben von: den Verunreinigungen, dem Wasser.

5. Dichtungssystem für das Azimutstrahlruder mit dem Ölfilter- und Schmiersystem (100, 200) nach Anspruch 4, wobei der mindestens eine erste Prozessor ferner konfiguriert ist, um den mindestens einen Indikator zu steuern, um eine zweite Angabe bereitzustellen, wenn die ersten Sensordaten auch mindestens eines angeben von: einer Menge der Verunreinigungen, einer Größe der Verunreinigungen, einer Wassermenge, die über dem entsprechenden vordefinierten Schwellenwert liegt.

6. Dichtungssystem für das Azimutstrahlruder mit dem Ölfilter- und Schmiersystem (100, 200) nach einem der Ansprüche 1 bis 5, wobei das Ölfilter- und Schmiersystem in ein geschlossenes Kreislaufsystem (202) integriert ist, in dem die Ölzirkulationsanordnung einen Öltank (206, 402), den Ölfilter (102, 208, 300) und die mindestens eine von:
der Azimutdichtung (116, 210, 404), der Propellerwellendichtung (118, 212, 406), miteinander fluidisch koppelt.

7. Dichtungssystem für das Azimutstrahlruder mit dem Ölfilter- und Schmiersystem (100, 200) nach Anspruch 6, wobei die Ölzirkulationsanordnung (110, 204) umfasst:
ein erstes Rohrleitungssystem (502) zum fluidischen Koppeln eines Öltanks (206, 402) mit der Azimutdichtung (116, 210, 404) über den Ölfilter (102, 208, 300); und
ein zweites Rohrleitungssystem (602) zum fluidischen Koppeln des Öltanks mit der Propellerwellendichtung (118, 212, 406) über den Ölfilter.

8. Dichtungssystem für das Azimutstrahlruder mit dem Ölfilter- und Schmiersystem (100, 200) nach Anspruch 7, wobei die Ölzirkulationsanordnung (110, 204) ferner mindestens ein in dem ersten Rohrleitungssystem (502) angeordnetes erstes Ventil und mindestens ein in dem zweiten Rohrleitungssystem (602) angeordnetes zweites Ventil umfasst, und wobei das Ölfilter- und Schmiersystem (100, 200) ferner umfasst:
mindestens einen zweiten Sensor, der einen Betriebszustand von mindestens einer überwacht von: der Azimutdichtung (116, 210, 404), der Propellerwellendichtung (118, 212, 406) des Azimutstrahlruders (400); und
mindestens einen zweiten Prozessor, der mit dem mindestens einen zweiten Sensor kommunikationsmäßig gekoppelt ist, wobei der mindestens eine erste Prozessor konfiguriert ist zum:
Empfangen von zweiten Sensordaten von dem mindestens einen zweiten Sensor;
Bestimmen, ob die mindestens eine von: der Azimutdichtung, der Propellerwellendichtung, in Betrieb ist, basierend auf den zweiten Sensordaten;
Steuern von mindestens einem von: dem mindestens einen ersten Ventil, dem mindestens eine zweiten Ventil, zum Ermöglichen der Ölströmung innerhalb des mindestens einen von: dem ersten Rohrleitungssystem, dem zweiten Rohrleitungssystem, wenn bestimmt wird, dass die mindestens eine von: der Azimutdichtung beziehungsweise der Propellerwellendichtung in Betrieb ist.

9. Dichtungssystem für das Azimutstrahlruder mit dem Ölfilter- und Schmiersystem (100, 200) nach Anspruch 10, wobei der mindestens eine zweite Sensor außerdem eine Drehzahl der mindestens einen von: der Azimutdichtung (116, 210, 404), der Propellerwellendichtung (118, 212, 406), die in Betrieb ist, bestimmt, und wobei der mindestens eine erste Prozessor ferner konfiguriert ist, um das mindestens eine von: dem mindestens einen ersten Ventil beziehungsweise dem mindestens einen zweiten Ventil, zu steuern, zum Ermöglichen der Ölströmung mit einer der Drehzahl entsprechenden Strömungsrate.

10. Dichtungssystem für das Azimutstrahlruder mit dem Ölfilter- und Schmiersystem (100, 200) nach Anspruch 1, wobei das Ölfilter- und Schmiersystem (100, 200) in dem Inneren des Azimutstrahlruders ausgebildet ist.

11. Verfahren zum Betreiben des Dichtungssystems für das Azimutstrahlruder mit dem Ölfilter- und Schmiersystem (100, 200) nach einem der Ansprüche 1 bis 10, umfassend:
Entfernen von Verunreinigungen aus ungefiltertem Öl (112, 216) durch Leiten des ungefilterten Öls durch den Ölfilter (102, 208, 300), und
Liefern von gefiltertem Öl (114, 218) an das Azimutstrahlruder.

## Revendications

1. Système d'étanchéité de propulseur azimutal doté d'un système de filtration d'huile et de lubrification (100, 200), le système de filtration d'huile et de lubrification comprenant :
un filtre à huile (102, 208, 300) comprenant une pluralité de couches (104, 304) d'un matériau filtrant, la pluralité de couches étant disposée à l'intérieur d'une chambre de filtration d'huile (106) de telle sorte que des couches adjacentes de la pluralité de couches aient une distance prédéfinie (108) entre elles ; et un agencement de circulation d'huile (110, 204),
dans lequel l'agencement de circulation d'huile permet le passage d'huile non filtrée (112, 216) entre les couches du filtre à huile, à un débit qui est inférieur à un débit prédéfini, le filtre à huile élimine les impuretés de l'huile non filtrée, et l'huile filtrée (114, 218) passe du filtre à huile au système d'étanchéité du propulseur azimutal, par l'agencement de circulation d'huile,
**caractérisé en ce que** l'huile filtrée lubrifie au moins l'un parmi : un joint azimutal (116, 210, 404), un joint d'arbre d'hélice (118, 212, 406), du propulseur azimutal, et dans lequel le filtre à huile est conçu pour éliminer les impuretés de l'huile, lesquelles impuretés ont une taille inférieure à 0,1 micromètre,
dans lequel le débit prédéfini est dans la plage de 0,1 litre par minute à 1 litre par minute, et
dans lequel la distance prédéfinie est dans la plage de 10 à 50 micromètres.

2. Système d'étanchéité de propulseur azimutal doté du système de filtration d'huile et de lubrification (100, 200) selon l'une quelconque des revendications précédentes, dans lequel la longueur d'une couche donnée dans la pluralité de couches (104, 304) du matériau filtrant, le long d'une direction d'écoulement d'huile à travers la chambre de filtration d'huile (106), se situe dans la plage de 10 à 100 cm.

3. Système d'étanchéité de propulseur azimutal doté du système de filtration d'huile et de lubrification (100, 200) selon l'une quelconque des revendications précédentes, dans lequel le matériau filtrant est au moins l'un parmi : cellulose, fibre de verre, papier, textile, fibre composite, ou une combinaison des matériaux susmentionnés.

4. Système d'étanchéité de propulseur azimutal doté du système de filtration d'huile et de lubrification (100, 200) selon l'une quelconque des revendications précédentes, comprenant en outre :
au moins un premier capteur (120) pour détecter la présence d'au moins l'une parmi : des impuretés, de l'eau, dans au moins l'une parmi : l'huile non filtrée, l'huile filtrée ; au moins un indicateur ; et
au moins un premier processeur couplé en communication à l'au moins un premier capteur et à l'au moins un indicateur, dans lequel l'au moins un premier processeur est configuré pour :
- recevoir des premières données de capteur provenant de l'au moins un premier capteur ;
- déterminer si les premières données de capteur indiquent la présence d'au moins l'une parmi : les impuretés, l'eau ; et
- commander l'au moins un indicateur pour qu'il fournisse une première indication, lorsqu'il est déterminé que les premières données de capteur indiquent la présence d'au moins l'une parmi : les impuretés, l'eau.

5. Système d'étanchéité de propulseur azimutal doté du système de filtration d'huile et de lubrification (100, 200) selon la revendication 4, dans lequel l'au moins un premier processeur est en outre configuré pour commander l'au moins un indicateur pour qu'il fournisse une seconde indication lorsque les données de premier capteur indiquent également qu'au moins l'une parmi : une quantité des impuretés, une taille des impuretés, une quantité de l'eau, est supérieure à son seuil prédéfini correspondant.

6. Système d'étanchéité de propulseur azimutal doté du système de filtration d'huile et de lubrification (100, 200) selon l'une quelconque des revendications 1 à 5, dans lequel le système de filtration d'huile et de lubrification est intégré dans un système en boucle fermée (202) dans lequel l'agencement de circulation d'huile accouple fluidiquement un réservoir d'huile (206, 402), le filtre à huile (102, 208, 300), et au moins l'un parmi :
le joint d'azimut (116, 210, 404), le joint d'arbre d'hélice (118, 212, 406), entre eux.

7. Système d'étanchéité de propulseur azimutal doté du système de filtration d'huile et de lubrification (100, 200) selon la revendication 6, dans lequel l'agencement de circulation d'huile (110, 204) comprend :
un premier système de tuyauterie (502) pour accoupler fluidiquement un réservoir d'huile (206, 402) au joint d'étanchéité azimutal (116, 210, 404), par l'intermédiaire du filtre à huile (102, 208, 300) ; et
un second système de tuyauterie (602) pour accoupler fluidiquement le réservoir d'huile au joint d'arbre d'hélice (118, 212, 406), par l'intermédiaire du filtre à huile.

8. Système d'étanchéité de propulseur azimutal doté du système de filtration d'huile et de lubrification (100, 200) selon la revendication 7, dans lequel l'agencement de circulation d'huile (110, 204) comprend en outre au moins une première valve agencée dans le premier système de tuyauterie (502) et au moins une seconde valve agencée dans le second système de tuyauterie (602), et dans lequel le système de filtration d'huile et de lubrification (100, 200) comprend en outre :
au moins un second capteur qui surveille un état de fonctionnement d'au moins l'un parmi : le joint azimutal (116, 210, 404), le joint d'arbre d'hélice (118, 212, 406), du propulseur azimutal (400) ; et
au moins un second processeur couplé en communication à l'au moins un second capteur, dans lequel l'au moins un premier processeur est configuré pour :
recevoir des secondes données de capteur provenant de l'au moins un second capteur ;
déterminer si l'un au moins parmi : le joint azimutal, le joint de l'arbre d'hélice, est en fonctionnement, en fonction des secondes données de capteur ;
commander au moins l'une parmi : l'au moins une première valve, l'au moins une seconde valve, pour permettre l'écoulement de l'huile dans au moins l'un parmi : le premier système de tuyauterie, le second système de tuyauterie, lorsqu'il est déterminé que l'au moins un parmi : le joint azimutal, le joint d'arbre d'hélice, est en fonctionnement, respectivement.

9. Système d'étanchéité de propulseur azimutal doté du système de filtration d'huile et de lubrification (100, 200) selon la revendication 10, dans lequel l'au moins un second capteur détermine également une vitesse de rotation de l'au moins un parmi : le joint azimutal (116, 210, 404), le joint d'arbre d'hélice (118, 212, 406), en fonctionnement, et dans lequel l'au moins un premier processeur est en outre configuré pour commander l'au moins une parmi : l'au moins une première valve, l'au moins une seconde valve, respectivement, pour permettre l'écoulement d'huile à un débit correspondant à la vitesse de rotation.

10. Système d'étanchéité de propulseur azimutal doté du système de filtration d'huile et de lubrification (100, 200) selon la revendication 1, dans lequel le système de filtration d'huile et de lubrification (100, 200) est formé à l'intérieur du propulseur azimutal.

11. Procédé de fonctionnement du système d'étanchéité de propulseur azimutal doté du système de filtration d'huile et de lubrification (100, 200) selon l'une quelconque des revendications 1 à 10, comprenant :
l'élimination des impuretés de l'huile non filtrée (112, 216) en faisant passer l'huile non filtrée à travers le filtre à huile (102, 208, 300), et
la distribution de l'huile filtrée (114, 218) au propulseur azimutal.
